(19) Europäisches Patentamt
European Patent Office
Office européen des brevets

(11) Publication number: **0 269 948 B1**

(12) **EUROPEAN PATENT SPECIFICATION**

(45) Date of publication of patent specification: **22.03.95**

(51) Int. Cl.[6]: **C08G 61/02**, C08G 61/08

(21) Application number: **87117015.5**

(22) Date of filing: **18.11.87**

The file contains technical information submitted after the application was filed and not included in this specification

# (54) Process for preparing modified polycycloolefins.

(30) Priority: **21.11.86 US 933426**

(43) Date of publication of application:
**08.06.88 Bulletin 88/23**

(45) Publication of the grant of the patent:
**22.03.95 Bulletin 95/12**

(84) Designated Contracting States:
**BE DE FR GB IT NL SE**

(56) References cited:
**EP-A- 0 084 375**
**FR-A- 2 179 838**
**US-A- 3 883 495**

**CHEMICAL ABSTRACTS, vol. 83, no. 18, 3rd November 1975, page 27, abstract no.148075n, Columbus, Ohio, US; & JP-A-75 56 491 (JAPAN SYNTHETIC RUBBER CO., LTD) 17-05-1975**

**POLYMER SCIENCE U.S.S.R.. vol. 19, no. 11, 1977, pages 2834-2852, Pergamon Press Ltd, PL; B.A. DOLGOPLOSK et al.: "II. Nature of the active sites and mechanism of opening of cyclo-olefins and metathesis of olefins"**

(73) Proprietor: **The B.F. Goodrich Company**
**3925 Embassy Parkway**
**Akron**
**Ohio 44313 (US)**

(72) Inventor: **Stricharczuk, Paul Thomas**
**32899 Charmwood Oval**
**Solon**
**Ohio 44139 (US)**
Inventor: **Minchak, Robert John**
**11954 Woodview Boulevard**
**Parma Heights**
**Ohio 44130 (US)**
Inventor: **Kettering, Timothy Joseph**
**7115 Big Creel Parkway**
**Middleburg Heights**
**Ohio 44130 (US)**
Inventor: **Janda, Dennis Joseph**
**3117 Coventry Drive**
**Parma**
**Ohio 44134 (US)**
Inventor: **Gribble, Glen Risdon, Jr.**
**4708 Roop Avenue**
**Barberton**
**Ohio 44203 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 269 948 B1**

Rank Xerox (UK) Business Services
(3.10/3.09/3.3.3)

(74) Representative: **von Kreisler, Alek, Dipl.-Chem. et al**
**Patentanwälte**
**von Kreisler-Selting-Werner**
**Postfach 10 22 41**
**D-50462 Köln (DE)**

## Description

### Background of the Invention

Polymers of cycloolefins containing a norbornene moiety are well known. Such polymers can be prepared by ring opening polymerization of monomers in the presence of a metathesis catalyst system composed of an alkylaluminum halide cocatalyst and a tungsten or a molybdenum compound catalyst. Such polymerization is accomplished by mixing a cycloolefin, with or without other copolymerizable monomers, with a hydrocarbon solvent in a reactor, adding thereto a molecular weight modifier followed by the alkylaluminum halide cocatalyst and a tungsten or a molybdenum compound catalyst. This solution polymerization reaction is conducted at -30 to 100 °C with stirring, and is mildly exothermic. Polymerization is completed in less than about two hours with the recovery of a smooth, viscous polymer cement of honey-like consistency that comprises a polymer dissolved in the solvent. This is a description of a typical solution polymerization process and product.

Bulk polymerization is polymerization that is carried out in the absence of a solvent or a diluent. Reaction injection molding or RIM is a type of bulk polymerization wherein a monomer in a liquid state is transferred or is injected into a mold where polymerization of the monomer takes place in the presence of a catalyst system. RIM is not conventional injection molding and is readily distinguishable therefrom.

RIM is a low pressure, one-step or one-shot, mix and injection of two or more liquid components into a closed mold where rapid polymerization occurs resulting in a molded plastic product. RIM differs from injection molding in a number of important respects. Injection molding is conducted at pressures of about 68.94 to 137.89 MPa (10,000 to 20,000 psi) in the mold cavity by melting a solid resin and conveying it into a mold maintained at a temperature less than the $T_G$ of the resin with the molten resin at about 150 ° to 350 °C. At an injection temperature of about 150 ° to 350 °C., viscosity of the molten resin in an injection molding process is generally in the range of 50,000 to 1,000,000 and typically about 200,000 mPa•s (cps). In the injection molding process, solidification of the resin occurs in about 10 to 90 seconds, depending on the size of the molded product, following which, the molded product is removed from the mold. There is no chemical reaction taking place in an injection molding process when the resin is introduced into a mold.

In a RIM process, viscosity of the materials fed to a mix chamber is about 1 to 10,000 mPa•s (cps), preferably 1 to about 1500 mPa•s (cps), at injection temperatures varying from room temperature for urethanes to about 100 °C. for lactams. Mold temperatures in a RIM process are in the range of about 50 ° to 150 °C. and pressures in the mold are generally in the range of about 0.344 MPa to 1.034 MPa (50 to 150 psi). At least one component in the RIM formulation is a monomer that is polymerized to a polymer in the mold. The main distinction between injection molding and RIM resides in the fact that in RIM, a chemical reaction is initiated on mixing, and is completed in the mold to transform monomers to a polymeric state. For practical purposes, the chemical reaction must take place rapidly in less than about 2 minutes.

U.S.-A-4,426,502 describes bulk polymerization of cycloolefins using a modified cocatalyst with a catalyst whereby polymerization of the cycloolefin monomers can be conducted in absence of a solvent or a diluent. The alkylaluminum halide cocatalyst is modified by pre-reacting it with an alcohol or an active hydroxy-containing compound to form an alkoxyalkylaluminum halide or an aryloxyalkylaluminum halide which is then used in the polymerization reaction. The pre-reaction can be accomplished by using oxygen, an alcohol, or a phenol. Such modification of the cocatalyst results in lowering of its reducing potential.

It is important to lower the reducing power of the cocatalyst in order to make such bulk polymerization reactions practical. When a monomer diluted with unmodified alkylaluminum cocatalyst is mixed with a monomer-diluted catalyst to polymerize a cycloolefin, the reaction is very rapid. In such systems, the polymerization is usually unacceptable because polymer formed at the interfaces of the two streams during intermingling prevents thorough mixing and results in poor conversions. Modifying the cocatalyst by pre-reaction with hydroxy-containing materials reduces the activity of the cocatalyst to the point where adequate mixing of the liquid components can occur and acceptable polymer products can be produced. Sometimes, a cycloolefinic monomer will contain various impurities that naturally reduce the activity of the cocatalyst. In such cases, it is not necessary to add active hydroxy-containing materials to reduce the activity of the cocatalyst. With the modified cocatalyst, mixing of the cycloolefins, and other components, can be carried out at lower temperatures, such as room temperature, without immediately initiating polymerization. The cocatalyst can be formulated to allow a reasonable pot life at room temperature and thermal activation in the mold of the mixed liquid components. The cocatalyst can also be formulated to give mixing initiated RIM systems.

U.S.-A-4,380,617 discloses the use of organoammonium molybdates and tungstates in the polymerization of cycloolefins. The organoammonium molybdate and tungstate catalysts are soluble in cycloolefins and in hydrocarbon solvents and therefore, do not require the use of an alkylester solvent, which caused problems in the prior art polymerizations. Furthermore, since the catalyst is soluble in cycloolefins, polymerization of the cycloolefins in bulk is thereby facilitated.

The Oreshkin et al article in European Polymer Journal, 13 (1977) on pp 447-450, reports the use of silane compounds as cocatalysts with molybdenum and tungsten catalysts in ring opening polymerization. Many of the silane compounds noted by the prior art article were tried in ring opening polymerization, however, it has since been determined in our laboratories that it is necessary to also include an organoaluminum reducing agent, such as triethylaluminum or diethylaluminum chloride, in order to carry out the ring opening polymerization.

US-A-4,481,344 discloses that high conversions can be obtained by ring opening polymerization of DCPD in the presence of a metathesis catalyst system and also in the presence of a halogen-containing hydrocarbyl additive which contains at least one trihalogen substituted carbon atom or at least one activated halogen atom. Examples of the additives are given at about the middle of col. 3 of this patent. Contrary to allegations made in this patent pertaining to the high degree of conversion, the use of ethyl trichloroacetate in our polymerization system resulted in conversions of only 92% and 94%. The Hercules patent uses a toluene extraction, gas chromatographic (GC) method of determining monomer conversions whereas the conversions given herein were obtained by thermogravimetric (TG) analysis wherein weight loss prior to 400 °C was counted as unconverted monomer. Whereas US-A-4 481 344 reports conversions of 99% by the GC method, the TG analysis used herein gives conversions of only 92 - 94%.

## Summary of Invention

Ring opening polymerization of cyclic olefins containing a norbornene group is carried out in bulk, one example being reaction injection molding, in the presence of a catalyst, cocatalyst, and a chlorosilane activator.

The present invention relates to a process for preparing a polymeric article by in-mold bulk polymerization comprising combining a plurality of reactant streams, one of which contains an organoammonium molybdate or tungstate catalyst, and a second of which contains a cocatalyst selected from alkylaluminum halides, alkoxyalkylaluminum halides, aryloxyalkylaluminum halides, wherein at least one of said reactant streams contains one or more cycloolefin monomers having at least one norbornene moiety in its structure as set forth as follows:

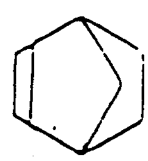

to form a reaction mixture, injecting said reaction mixture into a closed mold where polymerization occurs characterized by one of said plurality of reactant streams comprising an activator selected from tetrachlorotin or compounds represented by the following formula:

$R_mSiX_n$

wherein m is 0 to 3; n is 1 to 4; R is individually selected from hydrogen and alkyl groups of 1 to 6 carbon atoms; and X is individually selected from halogen atoms.

## Detailed Description of Invention

This invention pertains to bulk polymerization (including RIM) of cycloolefin monomers which contain a norbornene moiety. As used herein, bulk polymerization encompasses reaction injection molding wherein at least one monomer, catalyst, cocatalyst and an activator are mixed and then injected into a mold where polymerization and hardening of the polymer takes place quickly in a matter of less than 10 minutes, preferably less than 2 minutes, depending on the size and thickness of the molded object and other variables. The mold is normally preheated in order to facilitate the polymerization reaction in the mold.

The catalyst useful herein is selected from ring-opening metathesis catalysts. In this type of polymerization, the rings of the monomers are opened at a norbornenyl double bond to form amorphous or partially crystalline polymers containing backbone unsaturation. The metathesis catalysts include the molybdenum and tungsten halides, particularly molybdenum pentachloride and tungsten hexachloride, or variations thereof. The molybdenum and tungsten halides are unstable in air and react with oxygen or moisture. For this reason, these catalysts are blanketed with pure, dry nitrogen.

The molybdenum and tungsten halide catalysts start polymerizing the cycloolefin monomer even on standing at room temperature. A polymer begins to form within several hours on standing at room temperature, the polymer being in the form of an undesirable grainy mass of gelled polymer particles in unreacted monomer.

To overcome the disadvantages noted above, the catalysts are used in the form of organo-ammonium molybdates and tungstates, described in US-A- 4,426,502. These catalysts are soluble in cycloolefin monomers, can be handled at room temperature in a room environment since they are stable in the presence of air and moisture, and they do not prematurely polymerize at room temperature when mixed with cycloolefins. In a preferred embodiment, the ammonium molybdate and tungstate catalysts are used in a monomer solution to facilitate mixing the catalyst with the other ingredients of the polymerization system.

The ammonium or organoammonium molybdates and tungstates suitable herein as catalysts are defined as follows:

$[R_4N]_{(2y-6x)}M_xO_y$ $[R_3NH]_{(2y-6x)}M_xO_y$

where O represents oxygen; M represents either molybdenum or tungsten; x and y represent the number of M and O atoms, respectively, in the molecule based on the valence of +6 for molybdenum, +6 for tungsten, and -2 for oxygen.

In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the radicals are selected from alkyl groups each containing from 1 to 18 carbon atoms wherein the sum of carbon atoms on all of the radicals is from 15 to 54, more preferably from 21 to 42.

Specific examples of suitable organoammonium molybdates and tungstates described herein include tridodecylammonium molybdates and tungstates, methyltricaprylammonium molybdates and tungstates, tri-(tridecyl)ammonium molybdates and tungstates.

The organoammonium molybdate or tungstate is employed at a level of 0.005 to 50 millimoles molybdenum or tungsten per mole of total monomer, preferably 0.05 to 5.0 millimoles.

The alkylaluminum halide that is used in conjunction with at least one organoammonium molybdate or tungstate as a polymerization catalyst is selected from monoalkylaluminum dihalides, $RAlX_2$, dialkylaluminum monohalides, $R_2AlX$, alkylaluminum sesquihalides, $R_3Al_2X_3$, trialkylaluminum, $R_3Al$, and mixtures thereof. In the formulas for the alkylaluminum halide catalysts, R is an alkyl radical containing 1 to 12 carbon atoms, preferably 2 to 8 carbon atoms, and X is a halogen selected from chlorine, iodine, bromine and fluorine. Specific examples of such alkylaluminum halides include ethylaluminumdichloride, diethylaluminum monochloride, ethylaluminum sesquichloride, diethylaluminum iodide, ethylaluminum diiodide, trialkylaluminum, propylaluminum dichloride, propylaluminum diiodide, isobutylaluminum dichloride, ethylaluminum dibromide, methylaluminum sesquichloride, methylaluminum sesquibromide, trioctylaluminum, triethylaluminum and triisobutylaluminum.

US-A-4,426,502 describes polymerization of cycloolefins using a modified alkylaluminum halide cocatalyst. The cocatalyst is modified by pre-reacting an alkylaluminum halide with an alcohol or an active hydroxy-containing compound to form an alkoxyalkylaluminum halide or an aryloxyalkylaluminum halide which is then used in the polymerization reaction. The pre-reaction can be accomplished by using oxygen, an alcohol, or a phenol. The same thing can be accomplished by conducting the reaction in situ, i.e., by reacting alkylaluminum halide with alcohol in situ. The alkoxy or aryloxy group on the cocatalyst functions to inhibit the reducing power of the cocatalyst by replacing some of the alkyl groups on the aluminum. This makes it possible to adequately mix all the catalyst components and to react cyclic olefins by means of bulk polymerization.

The molar ratio of the alkylaluminum halide to the organoammonium molybdate or tungstate is not critical and can be in the range of 200:1 or more to 1:10, preferably from 10:1 to 2:1 of aluminum to molybdenum or tungsten.

The cycloolefin monomers that can be polymerized in accordance with the processes described herein are norbornene-type monomers which are characterized by the presence of at least one norbornene moiety

in its structure identified below:

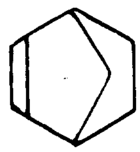

Suitable cycloolefin monomers include substituted and unsubstituted norbornenes, dicyclopentadienes, dihydrodicyclopentadienes, trimers of cyclopentadiene, tetracyclododecenes, hexacycloheptadecenes, ethylidenenorbornenes and vinylnorbornenes. Substituents on the cycloolefin monomers include hydrogen, alkyl and aryl groups of 1 to 20 carbon atoms, and saturated and unsaturated cyclic groups of 3 to 12 carbon atoms which can be formed with one or more, preferably two, ring carbon atoms. In a preferred embodiment, the substituents are selected from hydrogen and alkyl groups of 1 to 2 carbon atoms. Generally speaking, the substituents on the cycloolefin monomers can be any which do not poison or deactivate the polymerization catalyst.

Examples of the preferred monomers referred to herein include dicyclopentadiene, methyltetracyclododecene, 2-norbornene, and other norbornene monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, 5-phenyl-2-norbornene, and 5-dodecyl-2-norbornene. This invention especially contemplates preparation of homopolymers and copolymers of norbornene, methylnorbornene, tetracyclododecene, methyltetracyclododecene, dicyclopentadiene, and hexacycloheptadecene. Copolymers are defined as polymers composed of two or more monomers. Dicyclopentadiene (DCPD), methylnorbornene (MNB), methyltetracyclododecene (MTD), and methylcyclopentadiene dimer (MCDD) have the following structures:

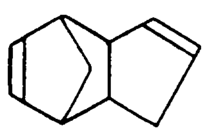
DCPD

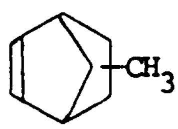
MNB

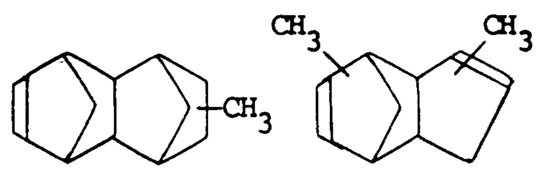
MTD MCDD

The cycloolefin monomers contemplated herein also include monomers disclosed in US-A-4,301,306 and US-A-4,324,717, all of which contain the norbornene structure depicted above.

The monomer or mixture of norbornene-type monomers can contain up to 20% by weight thereof of at least one other polymerizable monomer. Such other polymerizable monomers are preferably selected from mono- and dicycloolefins containing 4 to 12 carbon atoms, preferably 4 to 8 carbon atoms, examples of which include cyclobutene, cyclopentene, cyclopentadiene, cycloheptene, cyclooctene, 1,5-cyclooctadiene, cyclodecene, cyclododecene, cyclododecadiene, and cyclododecatriene. Also suitable are bicyclic olefins containing 7 to 16 carbon atoms and 1 to 4 double bonds, preferably 8 to 13 carbon atoms and 2 to 3 double bonds, such as norbornadiene. As should be apparent, cycloolefins that cannot be polymerized by ring opening, i.e., cyclohexene and derivatives thereof, are not employed in the polymerization process of this invention except as solvent.

Specific examples of preferred activators include the following chlorosilanes: dimethylmonochlorosilane, dimethyldichlorosilane, dihexyldichlorosilane and tetrachlorosilane.

Amount of the activator is in the range of 0.05 to 10 millimoles per mole of cycloolefins polymerized, preferably 0.1 to 2.0 millimoles.

A typical bulk polymerization (or RIM) for preparing polymeric cycloolefins involves the step of combining a plurality of streams to form a reaction mixture, injecting the reaction mixture into a closed mold, allowing sufficient time for the reaction mixture to polymerize, and recovering a polymeric product in the shape of the mold. Depending on the cocatalyst chosen, the reaction can be mixing initiated or thermally initiated. One stream contains the organoammonium catalyst of the metathesis catalyst system, another stream contains the modified or unmodified cocatalyst of the metathesis catalyst system, at least one stream contains one or more cycloolefin monomers and, optionally, at least one other copolymerizable monomer, and, optionally, at least one stream contains an alcohol or other hydroxy-containing compound,

and at least one stream contains the activator described herein. Only the catalyst must be maintained separately from the cocatalyst and introduced in a separate stream. The activator can be in either the modified or unmodified cocatalyst stream or it can be introduced diluted in a separate monomer stream.

Generally, the use of the activators disclosed herein in conjunction with RIM polymerization of dicyclopentadiene (DCPD) has resulted in a number of important advantages. With these activators, DCPD RIM polymerization rate and percent conversion have been increased markedly. The in-mold rate of reaction has increased whereby the reaction exotherm causes a temperature increase of 80 to 110°C in about 1 - 20 seconds with an activator whereas without the activator, the temperature increase is only 10 to 60°C in 1 to 2 minutes. With the activators, polymerization conversion has increased from about 80 to 90% to in excess of 97%. These conversions are measured via thermogravimetric analysis (TGA), with all volatiles driven off before 400°C is reached, are counted as unconverted monomer. And lastly, the important advantage of being able to lower mold temperatures from approximately 95°C to approximately 50°C is realized. At lower mold temperatures, molded articles cool below their Tg's more quickly and, therefore, can be removed from the mold more quickly.

It should be apparent that with the chlorosilane activators disclosed herein, the reactions are characterized by quick exotherms. These exotherms show a temperature increase of at least 80°C in 1 to 20 seconds, preferably 2 to 5 seconds, with mold temperatures as low as about 40 to 70°C for about 0.32cm (1/8") thick parts. The conversions exceed 95% and preferably exceed 97%.

A different mix of advantages is realized in the use of the activators disclosed herein in RIM polymerization of methyl norbornene (MNB) or methyl tetracyclododecene (MTD) or copolymers thereof with other copolymerizable monomers. Here, conversion rate for thicker samples (0.32cm to 0.635cm [1/8" to 1/4"]) appears to be about the same at about 96% with or without the activators, whereas with thinner samples on the order of 0.08cm to 0.15cm (1/32" to 1/16"), conversions have increased from about 80% without to above 92% with the activators. The thinner samples of poly (MNB), poly (MTD) or copolymers thereof include films. The mold temperature here is also reduced substantially on the order of 20 to 40°C or more and is advantageous because the maximum reaction temperature is lowered, allowing the production of molded objects with no or fewer voids and the molded object can be more quickly removed from the mold. The rate of reaction is increased with the use of activator but the rate increase is not as pronounced as with DCPD.

With MNB or MTD, RIM polymerization is rapid with or without an activator whereas with DCPD, reaction is slower without an activator and rapid with an activator. In the case of DCPD, lower grades of this material can be used in RIM polymerization when employing an activator which would be impractical in absence of an activator. The rate of reaction should be controlled since rapid polymerization of cycloolefins results in undesirable voids in the molded products. The voids are reduced or eliminated by reducing the rate of reaction. This can also be done to some extent by tempering the reducing power of the cocatalyst, as by employing more alcohol or a hydroxy-containing material in forming the modified cocatalyst.

In a preferred embodiment of RIM polymerization, the system includes a cycloolefin monomer which contains a norbornene group, a metathesis catalyst system which includes a catalyst and a cocatalyst, an organic alcohol to adjust pot life of the polymerization system by modifying the reducing power of the cocatalyst, and a chlorosilane activator. The catalyst is an organoammonium molybdate or tungstate whereas the cocatalyst is an alkylaluminum chloride or a trialkylaluminum.

The following examples demonstrate the use of activators in solution polymerization and RIM polymerization of cycloolefins.

Example 1 (comparison)

This example demonstrates RIM polymerization of methylnorbornene. Ethylaluminum sesquichloride cocatalyst as a 0.5 molar aluminum solution in toluene, bis (trioctylammonium) molybdate catalyst as a solution in toluene containing 0.1 gram-atom of molybdenum per liter of the solution, and 5-bicycloheptenylmethyldichlorosilane activator are used in the experiment. A small amount of a hindered phenol antioxidant, Ethanox-330, was also used in amounts indicated. The results of the experiments demonstrate faster rates, more rapid heat evolution and much higher conversions in instances where the chlorosilane compound was used. Compositions of samples A, B, C and D are given in Table I, below:

Table I

| Ingredients | Sample A | Sample B | Sample C | Sample D |
| --- | --- | --- | --- | --- |
| MNB | 20 ml (18g) | 20 ml (17g) | 20 ml (17g) | 20 ml (17g) |
| Antioxidant | 0.05g | 0.08g | 0.05g | --- |
| Silane | 0.1 ml | --- | --- | 0.05 ml |
| Recovered Polymer | 7.0g | 5.5g | 2.2g | 11.0g |

The above ingredients were added to separate bottles A, B, C, D and the bottles were heated to 60 ° C. to solubilize the antioxidant and then the bottles were cooled to room temperature. Bottle D did not contain any antioxident so it was not so heated.

To bottle A, 0.1 ml of the cocatalyst solution and 0.05 ml of the catalyst solution were added at room temperature. The bottle contents showed violent smoking and the bottle was very hot, indicating a vigorous reaction. After about a quarter of an hour cooling at room temperature, 80 ml of toluene was added to recover the polymer and this was followed immediately by addition of 2 ml of isopropanol short-stop. The polymer swelled to the total volume of solvent. Subsequently, isopropanol was added to coagulate the polymer. Most of the unreacted monomer was removed in the solvent/isopropanol mixture. The polymer was placed in a pan and toluene and more antioxidant were added before the polymer was dried.

To bottle B, 0.1 ml of the cocatalyst solution and 0.05 ml of the catalyst solution were added but no reaction took place. Several minutes thereafter, additional 0.025 ml of the catalyst solution was added, which resulted in observed reaction. To accelerate the reaction, additional 0.025 ml of the cocatalyst solution was added which completed the reaction. As with the bottle A experiment, 80 ml of toluene and 2 ml of isopropanol short stop were added to terminate the reaction. Polymer recovery was identical to A.

The contents of bottle C were initially cooled to 0°C in an ice bath. Then, 0.1 ml of the cocatalyst solution and 0.05 ml of the catalyst solution were added and the bottle was placed back into the ice bath. There appeared to be no polymer formation. To initiate polymerization, the bottle was removed from the ice bath and an infra-red lamp was turned on to heat the bottle. At this point, the contents in the bottle were fluid. Subsequently, 0.05 ml of additional cocatalyst solution was added after cooling the bottle in the ice bath. The bottle was brought to room temperature and left overnight. As previously, 2 ml of isopropanol short stop and 80 ml of toluene were added to terminate the reaction. Polymer recovery was similar to A. Some liquid on the polymer was poured off and the polymer placed in a pan and air-dried. A small amount of a soft sample was obtained with a rough surface that was light in color and transparent.

The contents of bottle D were also initially cooled to 0°C. in an ice bath. Again, 0.1 ml of the cocatalyst solution and 0.05 ml of the catalyst solution were added to the bottle and the infra-red lamp was turned on. Since the bottle contents became viscous almost immediately, the lamp was turned off after 2 minutes. The bottle became very hot, and the contents became rigid and nonflowing. The bottle D was left at room temperature overnight. Then, 2 ml of isopropanol and 80 ml of toluene were added to the bottle to terminate reaction and to swell the polymer. After adding alcohol to precipitate the polymer, the liquid was poured off from the polymer and the polymer was air dried. The recovered polymer sample had a nearly smooth surface, was light in color and transparent.

As is apparent from Table I, recovered weight of polymer for bottles A, B, C and D were 7.0 grams, 5.5g, 2.2g and 11.0g, respectively. The data in Table I indicates greater conversions in experiments where a chlorosilane compound was used. Reaction rates were faster and resulting temperatures higher in the resulting experiments with the chlorosilane present.

Example 2

This example demonstrates RIM polymerization of methyltetracyclododecene (MTD) in the presence of a metathesis catalyst system which includes a catalyst and a cocatalyst, in the presence of certain chlorosilane compounds. This example also demonstrates the need for a reducing agent such as alkylaluminum, in the cocatalyst for the reaction to take place.

Bis(trioctylammonium)hexamolybdate, 0.2 gram-atoms of molybdenum per liter of the MTD solution, was used as the catalyst. The cocatalyst was 0.5 molar solution of triethylaluminum in MTD or a 0.5 molar solution of diethylaluminum chloride and 2-propanol (1/1.25) in MTD. The chlorosilane compounds used were a 0.5 molar solution of diphenyldichlorosilane in MTD and a 0.5 molar solution of dimethyldichlorosilane in MTD.

Initially, bottles A, B, C and D all contained 0.3g of antioxidant and 20 ml of MTD. The bottles were heated to 60°C. to solubilize the Ethanox®-330 antioxidant and then cooled to about 30°C.

To bottle A were added 0.3 ml of the dimethyldichlorosilane solution, 0.2 ml of catalyst solution, and again an additional 0.3 ml of dimethyldichlorosilane solution. No reaction was observed to this point. Then, on addition of 0.1 ml of the triethylaluminum cocatalyst solution, reaction was observed.

To bottle B were added 0.3 ml of the cocatalyst solution of diethylaluminum chloride and 2-propanol and 0.2 ml the catalyst solution. Reaction was observed immediately. This experiment serves as the control for this series of experiments.

To bottle C were added as a comparison 0.3 ml diphenyldichlorosilane solution and 0.2 ml of the catalyst solution. No reaction was evident. A further addition of 0.2 ml of the catalyst solution and 0.3 ml of diphenyldichlorosilane solution were added to bottle C but no reaction was evident. Then, about one-half hour after inception of this experiment, one drop of triethylaluminum solution was added followed by an additional two drops of triethyl aluminum solution. Reaction became readily apparent after addition of the triethylaluminum cocatalyst solution.

To bottle D were added 0.1 ml of dimethyldichlorosilane solution and 0.2 ml of the diethylaluminum chloride and 2-propanol cocatalyst solution. No reaction was observed. Then, 0.2 ml of the catalyst solution was added to bottle B. Reaction was observed on addition of the catalyst solution, which indicates the necessary presence of a metathesis catalyst and cocatalyst. Further addition of 0.1 ml of triethylaluminum cocatalyst solution, accelerated the reaction.

Example 3 (comparison)

This experiment shows that without a chlorosilane, conversion rates are in the low 80s, which is too low for commercial applications. This experiment, therefore, is not illustrative of the invention claimed herein.

The alcohol here was used in the form of 0.5 molar solution of propanol in dicyclopentadiene (DCPD). Diethylaluminum chloride (DEAC) was used in the form of a 0.5 molar solution thereof also in DCPD. The catalyst here was tri(tridecylammonium) octamolybdate and was used containing 0.1 gram-atom of molybdenum per liter of the DCPD solution.

The procedure herein involved dissolving the antioxidant and impact modifier in DCPD in a bottle and sequentially adding the alcohol solution, the DEAC cocatalyst solution, and lastly the molybdenum catalyst solution. It is preferred to add the alcohol and DEAC together before adding the chlorosilane to avoid bringing the chlorosilane in contact with alcohol which results in a reaction and depletion of the alcohol.

The bottle is evacuated before addition of the catalyst to remove gases which produce bubbles in the molded piece. The bottle is also evacuated after addition of the catalyst for 1-2 minutes to also remove bubbles of gas. The bottle contents are then poured into a mold formed by a pair of parallel stainless steel plates preheated to a mold temperature of 55°C. After about 5-10 minutes, the mold is opened and a molded object is removed. A thermocoupole protrudes 1-1.5 cm from the bottom edge of the mold into the mold cavity and measures the temperature of the ingredients in the mold.

In this instance, the following were added to a bottle:

(a) 75ml of 99% DCPD
(b) 0.75 ml of Ethanox® 744 antioxidant
(c) 3.3 ml of 0.5 molar propanol solution
(d) 3.0 ml of 0.5 molar DEAC solution
(e) 3.0 ml of 0.1 gm-atom molybdenum/liter of tri(tridecylammonium) octamolybdate solution.

The contents of the bottle were poured into a mold preheated to 100°C. and were kept in the mold at 100°C for 10 minutes and then removed. Conversion of the DCPD monomer to the polymer was calculated to be 82.5%.

Example 4

This experiment demonstrates the improved conversion rate obtained when dimethylchlorosilane was used to activate a RIM polymerization of a charge of 95/5 DCPD/MTD comonomers. The ratio of the comonomers is on a weight basis. The procedure set forth in Ex. 3 was followed with the following exceptions:

1. 75g of the monomer charge was used plus 7.5g of Kraton® G 1652 impact modifier
2. 1.5 ml of Ethanox® 744 antioxidant was used
3. 0.6 ml of 1.0 molar dimethylchlorosilane solution in DCPD
4. 4.0 ml of the 0.5 molar propanol solution

With the dimethylchlorosilane activator, conversion rate of the 95/5 DCPD/MTD monomer charge was 96.1%.

Example 5

This experiment demonstrates the high conversion rate obtained with tetrachlorosilane in RIM polymerization of 97% DCPD following the procedure outlined above.

The following components in the amounts indicated were used:

| | |
|---|---|
| 97% DCPD | 75 ml |
| Kraton® G 1652 Impact Modifier | 1.9g |
| 0.25 Molar $SiCl_4$ Solution | 1.8 ml |
| 1.0 Molar Isopropanol Solution | 1.6 ml |
| 0.5 Molar DEAC Cocatalyst Solution | 3.6 ml |
| 0.1 gm-atom Molybdenum/liter of Molybdenum Catalyst Solution | 4.5 ml |

In carrying out this polymerization, the mold temperature was 55°C, maximum temperature attained during the exotherm was 157°C, the reaction exotherm took off at 60°C and had a temperature rise of 97°C., time to exotherm was 3 minutes and 4 seconds, from beginning of exotherm to peak temperature

was 30 seconds, from peak temperature down to 80 °C took 47.1 seconds to cool, and the pot life of the reaction mixture at room temperature was 20 minutes. Conversion rate attained here was a very impressive 98.25%.

Using 99% DCPD and MTD in the respective weight ratio of 95/5, with the tetrachlorosilane activator, a conversion of 99% was attained.

Example 6

This experiment demonstrates RIM polymerization of methyltetracyclododecene (MTD) in the presence and absence of tetrachlorosilane activator.

In carrying out these polymerizations, the following solutions were used:

0.5 Molar DEAC in MTD

1.0 Molar Isopropanol in MTD

0.1 gm-atom Molybdenum/liter of Molybdenum Catalyst in MTD

0.25 Molar Tetrachlorosilane in MTD

DEAC, as previously, is a contraction for diethylammonium chloride cocatalyst and the molybdenum catalyst was tri(tridecylammonium)octamolybdate.

The procedure here was similar to the procedure in the other examples. Pursuant to this procedure, bottles were dried for at least one hour at 105 °C., then removed and cooled to room temperature under a nitrogen purge. In the order given, the monomer, cocatalyst solution, alcohol solution, activator solution, and catalyst solution were then added to the bottle, with mixing after each addition. A pouring spout with a nitrogen inlet was placed on the bottle and the bottle was inverted to inject its contents into a preheated nitrogen-purged mold consisting essentially of a pair of spaced stainless steel plates. Temperature of the mold ingredients was recorded with a thermocouple placed about 1 to 1-1/2 cm from the bottom edge of the plaque that was formed in the mold. The plaque was (6" X 6") and a thickness of 0.32cm (1/8"). After about 10 (15.24cm X 15.24cm) minutes, the mold was opened and the plaque was removed. Conversion was determined by TGA analysis; all volatiles driven off before 400 °C was reached were counted as unreacted monomer.

The experiments set forth in Table A were carried out in bottles and then injected into a mold preheated to 75 °C.

TABLE A

| Sample No. | MTD Monomer | 0.5M DEAC Soln. mls | 1 M ROH Soln mls | Molar Ratio ROH/DEAC | 0.1 gm-atom Mo/liter mls | 0.25M $SiCl_4$ mls |
|---|---|---|---|---|---|---|
| A | 100g | 3.0 | 2.10 | 1.4 | 4.0 | 0.0 |
| B | 100g | 3.0 | 2.10 | 1.4 | 4.0 | 1.5 |
| C | 100g | 3.0 | 1.80 | 1.2 | 4.0 | 0.0 |
| D | 100g | 3.0 | 1.80 | 1.2 | 4.0 | 1.5 |

In the above experiments, the catalyst was tri(tridecylammonium) octamolybdate solution in MTD. The results are set forth in Table B, below:

TABLE B

| Sample No. | Cl-Si Soln. | TTh min. | EET min. | $M_xRT$ °C. | $IT_p$ °C. | % Conv. |
|---|---|---|---|---|---|---|
| A | 0 | 94 | 2.5 | 139 | 78 | 93.1 |
| B | 1.5 | 11 | 2.5 | 181 | 76 | 96.3 |
| C | 0 | 35 | 1.6 | 183 | 80 | 94.3 |
| D | 1.5 | 5 | 1.3 | 200 | 78 | 95.9 |

In the above Table B, TTh represents time to thickening or pot life of the reaction mixture, EET represents the elapsed time from the time of pouring to the beginning of the sharp rise in temperature (i.e., exotherm), $M_xRT$ is the maximum recorded temperature reached by the plaque in the mold, and $IT_p$ is the initiation temperature.

The above experiments demonstrate the higher conversions obtained when a chlorosilane was used in the reaction mixture.

**Claims**

**1.** A process for preparing a polymeric article by in-mold bulk polymerization comprising combining a plurality of reactant streams, one of which contains an organoammonium molybdate or tungstate catalyst, and a second of which contains a cocatalyst selected from alkylaluminum halides, alkoxyalkylaluminum halides, aryloxyalkylaluminum halides, wherein at least one of said reactant streams contains one or more cycloolefin monomers having at least one norbornene moiety in its structure as set forth as follows:

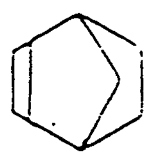

to form a reaction mixture, injecting said reaction mixture into a closed mold where polymerization occurs characterized by one of said plurality of reactant streams comprising

an activator selected from tetrachlorotin or compounds represented by the following formula:

$R_mSiX_n$

wherein m is 0 to 3; n is 1 to 4; R is individually selected from hydrogen and alkyl groups of 1 to 6 carbon atoms; and X is individually selected from halogen atoms.

**2.** Process of claim 1 therein said monomers are selected from substituted and unsubstituted norbornenes, dicyclopentadienes, dihydrodicyclopentadienes, trimers of cyclopentadienes, tetracyclododecenes, hexacycloheptadecenes, ethylidenenorbornenes, vinylnorbornenes, and mixtures thereof, and wherein substituents on said monomers are selected from alkyl and aryl groups of 1 to 20 carbon atoms, saturated and unsaturated cyclic groups of 3 to 12 carbon atoms which can be formed with at least one ring carbon atom, and mixtures thereof.

**3.** Process of claim 2 wherein said substituents on said monomers are selected from alkyl groups of 1 to 2 carbon atoms.

**4.** Process of claim 1 wherein said monomer is selected from dicyclopentadiene, methyltetracyclododecene, norbornene, ethylidenenorbornene, vinylnorbornene, alkyl and alkenyl norbornenes containing 1 to 12 carbon atoms in the alkyl or alkenyl group, and mixtures thereof.

**5.** Process of claim 4 for preparing a polymer of dicyclopentadiene (DCPD) selected from homopolymers of DCPD and copolymers thereof with at least one comonomer selected from ethylidenenorbornene, vinylnorbornene, methylnorbornene and methyltetracyclododecene (EN, VN, MNB and MTD), wherein

DCPD is present in a major proportion.

6. Process of claim 5 wherein said cocatalyst is selected from dialkylaluminum chloride, alkylaluminum sesquichloride, alkylaluminum dichloride, and mixtures thereof wherein the alkyl group in said cocatalyst contains 2 to 8 carbon atoms.

7. Process of claim 1 or 6 wherein the metathesis catalyst system further includes trialkyl aluminum.

8. Process of claim 6 wherein amount of said activator is 0.05 to 10.0 millimoles per mole of said monomer(s).

9. Process of claim 6 wherein amount of said activator is 0.1 to 2.0 millimoles per mole of monomer(s).

10. Process of claims 1 to 9 wherein said silane activators are selected from tetrachloro silane, dimethyldichlorosilane, dihexyldichlorosilane and dimethylmonochlorosilane.

**Patentansprüche**

1. Verfahren zur Herstellung eines polymeren Gegenstands durch Polymerisation in Masse in der Gußform, umfassend das Kombinieren mehrerer Reaktantenströme, von denen einer einen Organoammoniummolybdat- oder -wolframatkatalysator enthält und von denen ein zweiter einen Cokatalysator enthält, der aus Alkylaluminiumhalogeniden, Alkoxyalkylaluminiumhalogeniden und Aryloxyalkylaluminiumhalogeniden ausgewählt ist, wobei wenigstens einer der Reaktantenströme ein oder mehrere Cycloolefinmonomere mit wenigstens einer Norbornenstruktureinheit in ihrer Struktur enthält, die wie folgt anzugeben ist:

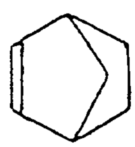

unter Bildung eines Reaktionsgemischs, das Einspritzen des Reaktionsgemischs in eine geschlossene Form, in der die Polymerisation stattfindet, dadurch gekennzeichnet, daß einer der Reaktantenströme einen Aktivator umfaßt, der ausgewählt ist aus Zinntetrachlorid oder Verbindungen, die durch die folgende Formel dargestellt werden:

$R_mSiX_n$

worin m 0 bis 3 ist, n 1 bis 4 ist, R einzeln aus Wasserstoff und Alkylgruppen mit 1 bis 6 Kohlenstoffatomen ausgewählt ist und X einzeln aus Halogenatomen ausgewählt ist.

2. Verfahren gemäß Anspruch 1, wobei die Monomere ausgewählt werden aus substituierten und unsubstituierten Norbornenen, Dicyclopentadienen, Dihydrodicyclopentadienen, Trimeren von Cyclopentadienen, Tetracyclododecenen, Hexacycloheptadecenen, Ethylidennorbornenen, Vinylnorbornenen und Gemischen davon und wobei Substituenten an den Monomeren ausgewählt werden aus Alkyl- und Arylgruppen mit 1 bis 20 Kohlenstoffatomen, gesättigten und ungesättigten cyclischen Gruppen mit 3 bis 12 Kohlenstoffatomen, die mit wenigstens einem Ringkohlenstoffatom gebildet werden können, und Gemischen davon.

3. Verfahren gemäß Anspruch 2, wobei die Substituenten an den Monomeren aus Alkylgruppen mit 1 bis 2 Kohlenstoffatomen ausgewählt werden.

4. Verfahren gemäß Anspruch 1, wobei das Monomer ausgewählt wird aus Dicyclopentadien, Methyltetracyclododecen, Norbornen, Ethylidennorbornen, Vinylnorbornen, Alkyl- und Alkenylnorbornenen mit 1 bis 12 Kohlenstoffatomen in der Alkyl- oder Alkenylgruppe und Gemischen davon.

5. Verfahren gemäß Anspruch 4 zur Herstellung eines Polymers aus Dicyclopentadien (DCPD), das ausgewählt wird aus Homopolymeren von DCPD und Copolymeren davon mit wenigstens einem Comonomer, das aus Ethylidennorbornen, Vinylnorbornen, Methylnorbornen und Methyltetracyclododecen (EN, VN, MNB und MTD) ausgewählt wird, wobei DCPD in einem größeren Anteil vorhanden ist.

6. Verfahren gemäß Anspruch 5, wobei der Cokatalysator ausgewählt wird aus Dialkylaluminiumchlorid, Alkylaluminiumsesquichlorid, Alkylaluminiumdichlorid und Gemischen davon, wobei die Alkylgruppe in dem Cokatalysator 2 bis 8 Kohlenstoffatome enthält.

7. Verfahren gemäß Anspruch 1 oder 6, wobei das Metathesekatalysatorsystem weiterhin Trialkylaluminium umfaßt.

8. Verfahren gemäß Anspruch 6, wobei die Menge des Aktivators 0,05 bis 10,0 Millimol pro Mol des Monomers (der Monomere) beträgt.

9. Verfahren gemäß Anspruch 6, wobei die Menge des Aktivators 0,1 bis 2,0 Millimol pro Mol des Monomers (der Monomere) beträgt.

10. Verfahren gemäß Anspruch 1 bis 9, wobei die Silanaktivatoren aus Tetrachlorsilan, Dimethyldichlorsilan, Dihexyldichlorsilan und Dimethylmonochlorsilan ausgewählt werden.

## Revendications

1. Procédé pour préparer un article polymère par polymérisation en masse en moule, comprenant la combinaison de plusieurs courants de corps destinés à réagir, dont l'un contient un catalyseur à base de molybdate ou de tungstate d'organo-ammonium et dont un second contient un co-catalyseur choisi parmi des halogénures d'alkyl aluminium, des halogénures d'alcoxyalkyl aluminium, des halogénures d'aryloxyalkyl aluminium, au moins l'un desdits courants de corps destinés à réagir contenant un ou plusieurs monomères cyclooléfiniques ayant dans sa structure au moins un fragment norbornène comme suit :

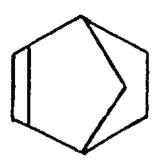

pour former un mélange réactionnel, l'injection dudit mélange réactionnel dans un moule fermé où se produit la polymérisation, procédé caractérisé en ce qu'un desdits plusieurs courants de corps destinés à réagir comprend un activateur choisi parmi du tétrachloroétain ou des composés représentés par la formule suivante :

$R_mSiX_n$

dans laquelle m vaut 0 à 3; n vaut 1 à 4; chaque R est choisi, individuellement, parmi un atome d'hydrogène et des groupes alkyles ayant 1 à 6 atomes de carbone; et chaque X est choisi, individuellement, parmi des atomes d'halogène(s).

2. Procédé selon la revendication 1, dans lequel lesdits monomères sont choisis parmi des norbornènes, des dicyclopentadiènes, des dihydrodicyclopentadiènes, des trimères de cyclopentadiènes, des tétracyclododécènes, des hexacycloheptadécènes, des éthylidène norbornènes, des vinylnorbornènes, substitués ou non substitués, et leurs mélanges, et les substituants fixés sur lesdits monomères sont choisis parmi des groupes alkyles et aryles ayant 1 à 20 atomes de carbone, des groupes cycliques, saturés et insaturés, ayant 3 à 12 atomes de carbone qui peuvent être formés avec au moins un atome de carbone de cycle, et leurs mélanges.

**3.** Procédé selon la revendication 2 dans lequel lesdits substituants fixés sur lesdits monomères sont choisis parmi des groupes alkyles ayant 1 à 2 atomes de carbone.

**4.** Procédé selon la revendication 1, dans lequel ledit monomère est choisi parmi du dicyclopentadiène, du méthyltétracyclododécène, du norbornène, de l'éthylidène norbornène, du vinylnorbornène, des alkyl- et alcényl-norbornènes contenant 1 à 12 atomes de carbone dans le groupe alkyle ou alcényle, et leurs mélanges.

**5.** Procédé selon la revendication 4 pour préparer un polymère de dicyclopentadiène (DCPD), choisi parmi des homopolymères de DCPD et leurs copolymères avec au moins un comonomère choisi parmi l'éthylidène norbornène (EN), le vinylnorbornène (VN), le méthylnorbornène (MNB) et le méthyltétracyclododécène (MTD), procédé dans lequel le DCPD (dicyclopentadiène) est présent en une proportion majeure.

**6.** Procédé selon la revendication 5, dans lequel ledit co-catalyseur est choisi parmi un chlorure de dialkyl aluminium, du sesquichlorure d'alkyl aluminium, du dichlorure d'alkyl aluminium et leurs mélanges, et le groupe alkyle présent dans ledit co-catalyseur contient 2 à 8 atomes de carbone.

**7.** Procédé selon la revendication 1 ou 6, dans lequel le système de catalyseur de double décomposition contient en outre du trialkyl aluminium.

**8.** Procédé selon la revendication 6, dans lequel la quantité dudit activateur est de 0,05 à 10,05 millimoles par mole dudit ou desdits monomère(s).

**9.** Procédé selon la revendication 6, dans lequel la quantité dudit activateur est de 0,1 à 2,0 millimoles par mole du ou des monomère(s).

**10.** Procédé selon l'une des revendications 1 à 9, dans lequel lesdits activateurs de type silane sont choisis parmi le tétrachlorosilane, le diméthyldichlorosilane, le dihexyldichlorosilane et le diméthylmonochlorosilane.